(19) Europäisches Patentamt
European Patent Office
Office européen des brevets

(11) EP 2 301 346 B1

(12) **EUROPÄISCHE PATENTSCHRIFT**

(45) Veröffentlichungstag und Bekanntmachung des Hinweises auf die Patenterteilung:
**27.06.2012 Patentblatt 2012/26**

(51) Int Cl.:
***A01N 31/08*** *(2006.01)* ***A01N 31/16*** *(2006.01)*
***A01N 43/653*** *(2006.01)* ***B27K 3/38*** *(2006.01)*
***B27K 3/50*** *(2006.01)* ***A01P 3/00*** *(2006.01)*

(21) Anmeldenummer: **10175946.2**

(22) Anmeldetag: **09.09.2010**

(54) **Zusammensetzungen enthaltend Triazole und Phenolderivate für den Schutz technischer Materialien**

Composition containing triazole compounds and phenol derivatives to protect technical materials

Compositions de triazole contenant des dérivés du phénol pour la protection de matériaux techniques

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **14.09.2009 EP 09170217**

(43) Veröffentlichungstag der Anmeldung:
**30.03.2011 Patentblatt 2011/13**

(73) Patentinhaber: **LANXESS Deutschland GmbH**
**51369 Leverkusen (DE)**

(72) Erfinder:
- **Koop, Bernd**
  **50668 Köln (DE)**
- **Kugler, Martin**
  **42799 Leichlingen (DE)**

(56) Entgegenhaltungen:
**WO-A1-00/78140 WO-A2-2005/058238**

- **URYUPINA T L ET AL: "Increasing the potential disease resistance of apples during storage" VESTNIK SEL'SKOHOZÂJSTVENNOJ NAUKI KAZAHSTANA, MINISTERSTVO SEL'SKOGO HOZÂJSTVA KAZAHSKOJ SSR, ALMA-ATA, KZ, Nr. 11, 1. Januar 1996 (1996-01-01), Seiten 43-52, XP009127653 ISSN: 0042-4684 -& DATABASE CA [Online] CHEMICAL ABSTRACTS SERVICE, COLUMBUS, OHIO, US; 1997, URYUPINA, T. L. ET AL: "Increasing the potential disease resistance of apples during storage" XP002562608 gefunden im STN Database accession no. 1997:328218**
- **TOR P SCHULTZ ET AL: "Review of Laboratory and Outdoor Exposure Efficacy Results of Organic Biocide: Antioxidant Combinations, An Initial Economic Analysis and Discussion of a Proposed Mechanism" WOOD AND FIBER SCIENCE, THE SOCIETY, LAWRENCE, KS, US, Bd. 37, 1. Januar 2005 (2005-01-01), Seiten 175-184, XP009127565 ISSN: 0735-6161**
- **SCHULTZ T P ET AL: "Naturally durable heartwood: evidence for a proposed dual defensive function of the extractives" PHYTOCHEMISTRY, PERGAMON PRESS, GB, Bd. 54, Nr. 1, 1. Mai 2000 (2000-05-01), Seiten 47-52, XP004291447 ISSN: 0031-9422**
- **SCHULTZ T P ET AL: "Development of environmentally-benign wood preservatives based on the combination of organic biocides with antioxidants and metal chelators" PHYTOCHEMISTRY, PERGAMON PRESS, GB, Bd. 61, Nr. 5, 1. November 2002 (2002-11-01), Seiten 555-560, XP026583678 ISSN: 0031-9422 [gefunden am 2002-11-01]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft Zusammensetzungen enthaltend wenigstens ein substituiertes Phenol (I) und wenigstens ein Azol, die Verwendung dieser Zusammensetzungen zum Schutz von technischen Materialien sowie technische Materialien.

Wirkstoffe für den Materialschutz, insbesondere gegen Pilze, stammen aus einer Vielzahl von Verbindungsklassen. Besonders wichtig sind für den Holzschutz z.B. Azole, insbesondere Triazole. Einzelwirkstoffe decken jedoch nicht das ganze Spektrum gegen die schädigenden Pilze ab, so dass häufig Kombinationen von Wirkstoffen eingesetzt werden müssen, oder die Wirkstoffe entsprechend hoch dosiert werden müssen.

Zur Behebung dieser Wirkstoffschwächen wurden für den Materialschutz, insbesondere für den Holzschutz, bereits verschiedene Möglichkeiten der Wirkverstärkung untersucht.

In W00071314 wird die Verwendung von Aminoxiden zur Wirkverstärkung von Azolen für den Holzschutz beschrieben. Die Wasserlöslichkeit der Aminoxide führt jedoch dazu, dass die Aminoxide leicht mit Wasser aus dem behandelten Holz ausgewaschen werden können, womit auch die Wirkverstärkung wieder verloren geht.

WO03065807 beschreibt die Verwendung von alkoxylierten Aminen zur Wirkverstärkung von Triazolen. Die Wasserlöslichkeit dieser Wirkverstärker führt jedoch ebenfalls dazu, dass sie leicht mit Wasser aus dem behandelten Holz ausgewaschen werden können.

US6231651-B1 beschreibt die Verwendung von sterisch gehinderten Phenolen zur Wirkverstärkung von insbesondere Propiconazol und Tebuconazol für den Holzschutz. Die dafür verwendeten Antioxidantien wie BHT werden jedoch in einem sehr großen Überschuss von bis zu ca. 450:1 (im Massen-Verhältnis zum Azol) eingesetzt. Dies ist sowohl aus ökonomischer als auch ökologischer Sicht von großem Nachteil.

Darüber hinaus ist die Verwendung von phenolischen Antioxidantien als Wirkverstärker von Tebuconazol und Propiconazol in Kombination mit Komplexbildnern, z.B. Ethylendiamintetraessigsäure (EDTA), bekannt (Phytochemistry 2002, 61, 555-560). Aber auch in diesem Fall werden sehr hohe Retentionen an BHT von bis zu ca. 26 kg pro $m^3$ Holz verwendet.

Aufgabe der vorliegenden Erfindung war es, Wirkverstärker für Azole für den Schutz von technischen Materialien, insbesondere für den Holzschutz, vor Befall und/oder Zerstörung durch Mikroorganismen bereitzustellen, die auf der einen Seite nur wenig aus dem technischen Material ausgewaschen werden und andererseits in einem ökonomischen Verhältnis zum Azol eingesetzt werden können.

Überraschenderweise wurde daher eine Zusammensetzung gefunden, enthaltend

a) wenigstens ein Azol und

b) wenigstens ein Phenol der Formel (I) oder deren Salze

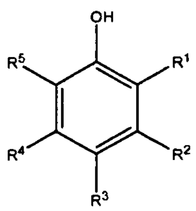

(I)

worin $R^1$, $R^2$, $R^3$, $R^4$ und $R^5$ jeweils unabhängig voneinander für Wasserstoff, gegebenenfalls substituiertes $C_1$-$C_{20}$-Alkyl, $C_2$-$C_{20}$-Alkenyl, $C_7$-$C_{18}$-Alkylaryl oder $C_3$-$C_{20}$-Cycloalkyl steht, mit der Maßgabe, dass wenigstens einer der Reste $R^1$-$R^5$ ungleich Wasserstoff ist und mit der Maßgabe, dass wenn die Reste $R^1$-$R^5$ ausschließlich für ggf. substituiertes $C_1$-$C_{20}$-Alkyl und ggf. für Wasserstoff stehen

- wenigstens einer der Reste $R^1$-$R^5$ für einen durch einen Phenylrest substituierten $C_1$-$C_2$-Alkylrest steht, wobei der Phenylrest ggf. durch Hydroxy und/oder $C_1$-$C_4$-Alkyl substituiert ist und

  - die Verbindung der Formel (I) wenigstens eine Methylgruppe trägt.

Als Azol wird vorzugsweise ein fungizid wirksames Azol eingesetzt, insbesondere wenigstens ein Triazol oder wenigstens ein Imidazol. Besonders bevorzugt ist ein Triazol. Insoweit wird vorzugsweise die verwendungsgemäße Zusammensetzung als mikrobizides Mittel, insbesondere als fungizides Mittel eingesetzt.

Besonders bevorzugte Azole sind Triazole ausgewählt aus der Gruppe bestehend aus Azaconazol, Bitertanol, Bromuconazol, Cyproconazol, Diclobutrazol, Difenoconazol, Diniconazol, Epoxyconazol, Etaconazol, Fenbuconazol, Fluquinconazol, Flusilazol, Flutriafol, Furconazol, Hexaconazol, Imibenconazol, Ipconazol, Myclobutanil, Metconazol, Penconazol, Propiconazol, Prothioconazol, Simeconazol, Tebuconazol, Tetraconazol, Triadimefon, Triadimenol, Triticonazol und Uniconazol sowie deren Metallsalze und Säureaddukte.

Ebenfalls bevorzugt sind Zusammensetzungen, enthaltend

a1) wenigstens ein Azol ausgewählt aus der Gruppe bestehend aus Azaconazol, Bitertanol, Bromuconazol, Cyproconazol, Diclobutrazol, Difenoconazol, Diniconazole, Epoxyconazol, Etaconazol, Fenbuconazol, Fluquinconazol, Flusilazol, Flutriafol, Furconazol, Hexaconazol, Imibenconazol, Ipconazol, Myclobutanil, Metconazol, Penconazol, Propiconazol, Prothioconazol, Simeconazol, Tebuconazol, Tetraconazol, Triticonazol und Uniconazol sowie deren Metallsalze und Säureaddukte und

a2) wenigstens ein Azol ausgewählt aus der Gruppe Triadimenol und Triadimefon.

Bevorzugt wird eine Zusammensetzung verwendungsgemäß eingesetzt, die wenigstens ein Azol ausgewählt aus der Gruppe Tebuconazol, Propiconazol, Triadimefon, Triadimenol und Cyproconazol enthält.
Besonders bevorzugt sind Zusammensetzungen, enthaltend wenigstens ein Azol ausgewählt aus der Gruppe Tebuconazol, Propiconazol und Cyproconazol und ggf. ein weiteres Azol ausgewählt aus der Gruppe Triadimenol und Triadimefon.
Besonders bevorzugt sind dabei die folgenden Azol Kombinationen: Tebuconazol und Triadimefon, Tebuconazol und Propiconazol, Tebuconazol und Cyproconazol sowie Propiconazol und Cyproconazol.
Besonders bevorzugte Imidazole sind z. B. Clotrimazol, Bifonazol, Climbazol, Econazol, Fenapanil, Imazalil, Isoconazol, Ketoconazol, Lombazol, Miconazol, Pefurazoat, Prochloraz, Triflumizol sowie deren Metallsalze und Säureaddukte.
Bevorzugt sind Phenole der Komponente b), worin wenigstens einer der Reste $R^1$-$R^5$ der Formel (I) für -$CHR^6$-Phenyl steht, worin
$R^6$ für Wasserstoff oder Methyl steht und
Phenyl unsubstituiert oder durch Hydroxy und wenigstens einen $C_1$-$C_4$-Alkylrest substituiert ist.
Besonders bevorzugt sind Zusammensetzungen, die als Komponente b) wenigstens ein styrolisiertes Phenol oder 6,6'-Di-tert-butyl-2,2'-methylendi-p-kresol enthält.
Als styrolisiertes Phenol können auch Mischungen von ein-, zwei- und/oder dreifach styrolisiertem Phenol eingesetzt werden, wie beispielsweise dem als Vulkanox® SP von LANXESS bekannten Produkt, bei dem es sich um Mischungen der Formel (I) handelt, die ein bis drei der Reste $R^1$-$R^5$ der Formel (I) die Bedeutung -$CH(CH_3)$Phenyl haben.
Das 6,6'-Di-tert-butyl-2,2'-methylendi-p-kresol ist beispielsweise unter dem Namen Vulkanox® BKF von LANXESS im Handel.
Das eingesetzte Azol der Komponente a) wird vorzugsweise zu b) im Gewichtsverhältnis von 50 : 1 bis 1 : 50, insbesondere von 10 : 1 bis 1 : 10, bevorzugt von 5 : 1 bis 1 : 5 eingesetzt. Besonders bevorzugt wird b) zum Azol im Verhältnis von 1 : 1 bis 5 : verwendet.
Die erfindungsgemäß eingesetzten Zusammensetzungen können fest oder flüssig zum Einsatz kommen. Dabei kommen Formulierungen wie Lösungen, Emulsionen, Suspensionen, Pulver, Granulate, Pasten, Aerosole sowie Feinstverkapselungen in polymeren Stoffen in Frage.
Solche Formulierungen können in bekannter Weise hergestellt werden, z.B. durch Vermischen der Zusammensetzungen mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können auch organische Lösungsmittel als Hilfslösungsmittel mitverwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycerol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter normalem Druck gasförmig sind, z.B. Aerosol-Treibgase, wie Halogenkohlenwasserstoffe sowie Butan, Propan, Stickstoff und Kohlendioxid. Als feste Träger kommen in Frage: z.B. natürliche Gesteinsmehle, wie Kaoline, Tonerden, Talkum, Kreide, Quarz, Attapulgit, Montmorillonit oder

Diatomeenerde und synthetische Gesteinsmehle, wie hochdisperse Kieselsäure, Aluminiumoxid und Silikate. Als feste Trägerstoffe für Granulate kommen in Frage: z.B. gebrochene und fraktionierte natürliche Gesteine wie Calcit, Marmor, Bims, Sepiolit, Dolomit sowie synthetische Granulate aus anorganischem und organischem Mehlen sowie Granulate aus organischem Material wie Sägemehl, Kokosnussschalen, Maiskolben und Tabakstengeln. Als Emulgier- und/oder schaumerzeugende Mittel kommen in Frage: z.B. nichtionische und anionische Emulgatoren, wie Polyoxyethylen-Fettsäureester, Polyoxyethylen-Fettalkoholether, z.B. Alkylarylpolyglycolether, Alkylsulfonate, Alkylsulfate, Arylsulfonate sowie Eiweißhydrolysate. Als Dispergiermittel kommen in Frage: z.B. Ligninsulfitablaugungen und Methylcellulose.

Es können in den Formulierungen zudem Haftmittel wie Carboxymethylcellulose, natürliche und synthetische, pulverige, körnige oder latexförmige Polymere verwendet werden, wie Gummi arabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Die eingesetzte Zusammensetzung kann vorzugsweise Chelatisierungsmittel (beispielsweise Ethylendiamintetraessigsäure (EDTA), Diethylentriaminpentaessigsäure (DTPA), Nitrilotriessigsäure (NTA) oder Citronensäure oder deren Salze) enthalten, vorzugsweise im Stoffmengen-Verhältnis zum Azol von 1:20 bis 20:1, vorzugsweise 5:1 bis 1:5.

Die Zusammensetzungen können weiterhin Farbstoffe wie anorganische Pigmente, z.B. Eisenoxid, Titanoxid, Ferrocyanblau, Kupferoxid und organische Farbstoffe, wie Alizarin-, Azo- und Metallphthalocyaninfarbstoffe enthalten.

Die eingesetzte Zusammensetzung enthält im allgemeinen vorzugsweise 0,1 bis 95 Gewichtsprozent der Komponenten a) und b), vorzugsweise 0,5 bis 90 Gew.-%.

Die verwendungsgemäßen Zusammensetzungen können auch noch weitere Wirkstoffe bspw. Fungizide, Bakterizide und/oder Insektizide enthalten, um so z.B. das Wirkungsspektrum zu verbreitern oder Resistenzentwicklungen vorzubeugen. In vielen Fällen erhält man dabei synergistische Effekte, d.h. die Wirksamkeit kombinierter Wirkstoffe ist größer als die Wirksamkeit der Einzelkomponenten.

Besonders günstige Mischungspartner sind z.B. die folgenden Verbindungen:

Pyridine und Pyrimidine wie:

Ancymidol, Buthiobate, Fenarimol, Mepanipyrin, Nuarimol, Pyroxyfur, Triamirol;

Succinat-Dehydrogenase Inhibitoren wie:

Benodanil, Bixafen, Boscalid, Carboxim, Carboximsulfoxid, Cyclafluramid, Fenfuram, Flutanil, Furametpyr, Furcarbanil, Furmecyclox, Mebenil, Mepronil, Methfuroxam, Metsulfovax, Nicobifen, Pyrocarbolid, Oxycarboxin, Seedvax;

Naphthalin-Derivate wie:

Terbinafine, Naftifine, Butenafine;

Sulfenamide wie:

Dichlofluanid, Tolylfluanid, Folpet, Fluorfolpet, Captan, Captofol;

Benzimidazole wie:

Carbendazim, Benomyl, Fuberidazole, Thiabendazole oder deren Salze;

Morpholinderivate wie:

Aldimorph, Dimethomorph, Dodemorph, Falimorph, Fenpropidin Fenpropimorph, Tridemorph, Trimorphamid und ihre arylsulfonsauren Salze, wie z.B. p-Toluolsulfonsäure und p-Dodecylphenyl-sulfonsäure;

Benzthiazole wie:

2-Mercaptobenzothiazol;

Benzthiophendioxide wie:

Benzo[b]thiophen-S,S-dioxid-carbonsäurecyclohexylamid;

Benzamide wie:

2,6-Dichloro-N-(4-trifluoromethylbenzyl)-benzamide, Tecloftalam;

Borverbindungen wie:

Borsäure, Borsäureester, Borax;

Formaldehyd und formaldehydabspaltende Verbindungen wie:

Benzylalkoholmono-(poly)-hemiformal, n-Butanol-hemiformal, Dazomet, Ethylenglycol hemiformal, Hexa-hydro-S-triazine, Hexamethylentetramin, N-Hydroxymethyl-N'-methylthioharnstoff, N-Methylolchloracetamid, Oxazolidine, Paraformaldehyd, Taurolin, Tetrahydro-1,3-oxazin, N-(2-Hydroxypropyl)-amin-methanol, Tetramethylol-acetylen-diharnstoff;

Isothiazolinone wie:

N-Methylisothiazolin-3-on, 5-Chlor-N-methylisothiazolin-3-on, 4,5-Dichloro-N-octylisothiazolin-3-on, 5-Chlor-N-octylisothiazolinon, N-Octyl-isothiazolin-3-on, 4,5-Trimethylen-isothiazolinone, 4,5-Benzisothiazolinone;

Aldehyde wie:

Zimtaldehyd, Formaldehyd, Glutardialdehyd, β-Bromzimtaldehyd, o-Phthaldialdehyd;

Thiocyanate wie:

Thiocyanatomethylthiobenzothiazol, Methylenbisthiocyanat;

quartäre Ammoniumverbindungen und Guanidine wie: Benzalkoniumchlorid, Benzyldimethyltetradecylammonium-chlorid, Benzyldimethyldodecylammoniumchlorid, Dichlorbenzyldimethylalkylammoniumchlorid, Didecyldimethyl-ammoniumchlorid, Dioctyldimethylammoniumchlorid, N-Hexadecyltrimethylammoniumchlorid, 1-Hexadecylpyridiniumchlorid, Iminoctadine-tris(albesilate);

Iodderivate wie:

Diiodmethyl-p-tolylsulfon, 3-Iod-2-propinyl-alkohol, 4-Chlorphenyl-3-iodpropargylformal, 3-Brom-2,3-diiod-2-propenylethylcarbamat, 2,3,3-Triiodallylalkohol, 3-Brom-2,3-diiod-2-propenylalkohol, 3-Iod-2-propinyl-n-butylcarbamat, 3-Iod-2-propinyl-n-hexylcarbamat, 3-Iod-2-propinyl-cyclohexylcarbamat, 3-Iod-2-propinyl-phenylcarbamat;

Phenole wie:

Tribromphenol, Tetrachlorphenol, 3-Methyl-4-chlorphenol, 3,5-Dimethyl-4-chlorphenol, Dichlorphen, 2-Benzyl-4-chlorphenol, Triclosan, Diclosan, Hexachlorophen, p-Hydroxybenzoesäureester, o-Phenylphenol, m-Phenylphenol, p-Phenylphenol, 4-(2-tert.-Butyl-4-methyl-phenoxy)-phenol, 4-(2-Isopropyl-4-methylphenoxy)-phenol, 4-(2,4-Dimethylphenoxy)-phenol und deren Alkali- und Erdalkalimetallsalze;

Mikrobizide mit aktivierter Halogengruppe wie:

Bronopol, Bronidox, 2-Brom-2-nitro-1,3-propandiol, 2-Brom-4'-hydroxy-acetophenon, 1-Brom-3-chlor-4,4,5,5-tetramethyl-2-imidazoldinone, β-Brom-β-nitrostyrol, Chloracetamid, Chloramin T, 1,3-Dibrom-4,4,5,5-tetrametyl-2-imidazoldinone, Dichloramin T, 3,4-Dichlor-(3H)-1,2-dithiol-3-on, 2, 2-Dibrom-3-nitril-propionamid, 1,2-Dibrom-2,4-dicyanobutan, Halane, Halazone, Mucochlorsäure, Phenyl-(2-chlor-cyan-vinyl)sulfon, Phenyl-(1,2-dichlor-2-cyanvinyl)sulfon, Trichlorisocyanursäure;

Pyridine wie:

1-Hydroxy-2-pyridinthion (und ihre Cu-, Na-, Fe-, Mn-, Zn-Salze), Tetrachlor-4-methylsulfonyl-pyridin, Pyrimethanol, Mepanipyrim, Dipyrithion, 1-Hydroxy-4-methyl-6-(2,4,4-trimethylpentyl)-2(1H)-pyridin;

Methoxyacrylate oder ähnliches wie:

Azoxystrobin, Dimoxystrobin, Fluoxastrobin, Kresoxim-methyl, Metominostrobin, Orysastrobin, Picoxystrobin, Pyraclostrobin, Trifloxystrobin;

Metallseifen wie:

Salze der Metalle Zinn, Kupfer und Zink mit höheren Fett-, Harz-, Naphthensäuren und Phosphorsäure wie z.B. Zinn-, Kupfer-, Zinknaphtenat, -octoat, 2-ethylhexanoat, -oleat, -phosphat, -benzoat;

Metallsalze wie:

Salze der Metalle Zinn, Kupfer, Zink, sowie auch Chromate und Dichromate wie z.B. Kupferhydroxycarbonat, Natriumdichromat, Kaliumdichromat, Kaliumchromat, Kupfersulfat, Kupferchlorid, Kupferborat, Zinkfluorosilikat, Kupferfluorosilikat;

Oxide wie:

Oxide der Metalle Zinn, Kupfer und Zink wie z.B. Tributylzinnoxid, $Cu_2O$, CuO, ZnO;

Oxidationsmittel wie:

Wasserstoffperoxid, Peressigsäure, Kaliumpersulfat;

Dithiocarbamate wie:

Cufraneb, Ferban, Kalium-N-hydroxymethyl-N'-methyl-dithiobarbamat, Na- oder K-dimethyldithiocarbamat, Mancozeb, Maneb, Metam, Metiram, Thiram, Zineb, Ziram;

Nitrile wie:

2,4,5,6-Tetrachlorisophthalodinitril, Dinatrium-cyano-dithioimidocarbamat;

Chinoline wie:

8-Hydroxychinolin und deren Cu-Salze;

sonstige Fungizide und Bakterizide wie:
Bethozaxin, 5-Hydroxy-2(5H)-furanon; 4,5-Benzdithiazolinon, 4,5-Trimethylendithiazolinon, N-(2-p-Chlorbenzoylethyl)-hexaminiumchlorid, 2-Oxo-2-(4-hydroxy-phenyl)acethydroximsäure-chlorid, Tris-N-(cyclohexyldiazeniumdioxy)-aluminium, N-(Cyclohexyldiazeniumdioxy)-tributylzinn bzw. K-Salze, Bis-N-(cyclohexyldiazeniumdioxy)-kupfer, Iprovalicarb, Fenhexamid, Spiroxamine, Carpropamid, Diflumetorin, Quinoxyfen, Famoxadone, Polyoxorim, Acibenzolar-S-methyl, Furametpyr, Thifluzamide, Methalaxyl-M, Benthiavalicarb, Metrafenone, Cyflufenamid, Tiadinil, Teebaumöl, Phenoxyethanol,
**[0056]** Ag, Zn oder Cu-haltige Zeolithe allein oder eingeschlossen in polymere Werkstoffe.

Insektizide:

Abamectin, Acephat, Acetamiprid, Acetoprole, Acrinathrin, Alanycarb, Aldicarb, Aldoxycarb, Aldrin, Allethrin, Alpha-cypermethrin, Amidoflumet, Amitraz, Avermectin, Azadirachtin, Azinphos A, Azinphos M, Azocyclotin,

Bacillus thuringiensis, Barthrin, 4-Bromo-2(4-chlorphenyl)-1-(ethoxymethyl)-5-(trifluoromethyl)-1H-pyrrole-3-carbonitrile, Bendiocarb, Benfuracarb, Bensultap, Betacyfluthrin, Bifenthrin, Bioresmethrin, Bioallethrin, Bistrifluron, Bromophos A, Bromophos M, Bufencarb, Buprofezin, Butathiophos, Butocarboxin, Butoxycarboxim,

Cadusafos, Carbaryl, Carbofuran, Carbophenothion, Carbosulfan, Cartap, Chinomethionat, Cloethocarb, 4-Chlor-2-(2-chlor-2-methylpropyl)-5-[(6-iod-3-pyridinyl)methoxy]-3(2H)- pyridazinone (CAS-RN: 120955-77-3), Chlordane, Chlorethoxyfos, Chlorfenapyr, Chlorfenvinphos, Chlorfluazuron, Chlormephos, N-[(6-Chloro-3-pyridinyl)-methyl]-N'-cyano-N-methyl-ethanimidamide, Chlorpicrin, Chlorpyrifos A, Chlorpyrifos M, Cis-Resmethrin, Clocythrin, Clothiazoben, Cypophenothrin Clofentezin, Coumaphos, Cyanophos, Cycloprothrin, Cyfluthrin, Cyhalothrin, Cyhexatin, Cypermethrin, Cyromazin,

Decamethrin, Deltamethrin, Demeton M, Demeton S, Demeton-S-methyl, Diafenthiuron, Dialiphos, Diazinon, 1,2-Dibenzoyl-1(1,1-dimethyl)-hydrazin, DNOC, Dichlofenthion, Dichlorvos, Dicliphos, Dicrotophos, Difethialone, Diflubenzuron, Dimethoat, 3,5-Dimethylphenylmethylcarbamat, Dimethyl-(phenyl)-silyl-methyl-3-phenoxybenzylether, Dimethyl-(4-Ethoxyphenyl)-silylmethyl-3-phenoxybenzylether, Dimethylvinphos, Dioxathion, Disulfoton,

Eflusilanate, Emamectin, Empenthrin, Endosulfan, EPN, Esfenvalerat, Ethiofencarb, Ethion, Etofenprox, Etrimphos, Etoxazole, Etobenzanid,

Fenamiphos, Fenazaquin, Fenbutatinoxid, Fenfluthrin, Fenitrothion, Fenobucarb, Fenothiocarb, Fenoxycarb, Fenpropathrin, Fenpyrad, Fenpyroximat, Fensulfothion, Fenthion, Fenvalerate, Fipronil, Flonicamid, Fluacrypyrim, Fluazuron, Flucycloxuron, Flucythrinate, Flufenerim, Flufenoxuron, Flupyrazofos, Flufenzine, Flumethrin Flufenprox, Fluvalinate, Fonophos, Formethanate, Formothion, Fosmethilan Fosthiazat, Fubfenprox, Furathiocarb,

Halofenocid, HCH (CAS RN: 58-89-9), Heptenophos, Hexaflumuron, Hexythiazox, Hydramethylnon, Hydroprene,

Imidacloprid, Imiprothrin, Indoxycarb, Iodfenfos, Iprinomectin, Iprobenfos, Isazophos, Isoamidophos, Isofenphos, Isoprocarb, Isoprothiolane, Isoxathion, Ivermectin, Lama-cyhalothrin, Lufenuron,

Kadedrin,

Lambda-Cyhalothrin, Lufenuron,

Malathion, Mecarbam, Mervinphos, Mesulfenphos, Metaldehyd, Methacrifos, Methamidophos, Methidathion, Methiocarb, Methomyl, Metalcarb, Milbemectin, Monocrotophos, Moxiectin,

Naled, NI 125, Nicotin, Nitenpyram, Noviflumuron,

Omethoat, Oxamyl, Oxydemethon M, Oxydeprofos,

Parathion A, Parathion M, Penfluron, Permethrin, 2-(4-Phenoxyphenoxy)-ethyl-ethylcarbamat, Phenthoat, Phorat, Phosalon, Phosmet, Phosphamidon, Phoxim, Pirimicarb, Pirimiphos M, Pirimiphos A, Prallethrin, Profenophos, Promecarb, Propaphos, Propoxur, Prothiophos, Prothoat, Pymetrozin, Pyrachlophos, Pyridaphenthion, Pyresmethrin, Pyrethrum, Pyridaben, Pyridalyl, Pyrimidifen, Pyriproxifen, Pyrithiobac-natrium

Quinalphos,

Resmethrin, Rotenone,

Salithion, Sebufos, Silafluofen, Spinosad, Spirodiclofen, Spiromesifen, Sulfotep, Sulprofos,

Tau-fluvalinate, Taroils, Tebufenozide, Tebufenpyrad, Tebupirimphos, Teflubenzuron, Tefluthrin, Temephos, Terbam, Terbufos, Tetrachlorvinphos, Tetramethrin, Tetramethacarb, Thiacloprid, Thiafenox, Thiamethoxam, Thiapronil, Thiodicarb, Thiofanox, Thiazophos, Thiocyclam, Thiomethon, Thionazin, Thuringiensin, Tralomethrin, Transfluthrin, Triarathen, Triazophos, Triazamate, Triazuron, Trichlorfon, Triflumuron, Trimethacarb,

Vamidothion, Xylylcarb, Zetamethrin;

Herbizide und Algizide:

Acetochlor, Acifluorfen, Aclonifen, Acrolein, Alachlor, Alloxydim, Ametryn, Amidosulfuron, Amitrole, Ammonium sulfamate, Anilofos, Asulam, Atrazine, Azafenidin, Aziptrotryne, Azimsulfuron,

Benazolin, Benfluralin, Benfuresate, Bensulfuron, Bensulfide, Bentazone, Benzofencap, Benzthiazuron, Bifenox, Bispyribac, Bispyribac-Natrium, Borax, Bromacil, Bromobutide, Bromofenoxim, Bromoxynil, Butachlor, Butamifos, Butralin, Butylate, Bialaphos, Benzoyl-prop, Bromobutide, Butroxydim,

Carbetamide, Carfentrazone-ethyl, Carfenstrole, Chlomethoxyfen, Chloramben, Chlorbromuron, Chlorflurenol, Chloridazon, Chlorimuron, Chlornitrofen, Chloroacetic acid, Chloransulam-methyl, Cinidon-ethyl, Chlorotoluron, Chloroxuron, Chlorpropham, Chlorsulfuron, Chlorthal, Chlorthiamid, Cinmethylin, Cinofulsuron, Clefoxydim, Clethodim, Clomazone, Chlomeprop, Clopyralid, Cyanamide, Cyanazine, Cycloate, Cycloxydim, Chloroxynil, Clodinafop-propargyl, Cumyluron, Clometoxyfen, Cybutryn, Cyhalofop, Cyhalofop-butyl, Clopyrasuluron, Cyclosulfamuron,

Diclosulam, Dichlorprop, Dichlorprop-P, Diclofop, Diethatyl, Difenoxuron, Difenzoquat, Diflufenican, Diflufenzopyr, Dimefuron, Dimepiperate, Dimethachlor, Dimethipin, Dinitramine, Dinoseb, Dinoseb Acetate, Dinoterb, Diphenamid, Dipropetryn, Diquat, Dithiopyr, Diuron, DNOC, DSMA, 2,4-D, Daimuron, Dalapon, Dazomet, 2,4-DB, Desmedipham, Desmetryn, Dicamba, Dichlobenil, Dimethamid, Dithiopyr, Dimethametryn,

Eglinazine, Endothal, EPTC, Esprocarb, Ethalfluralin, Ethidimuron, Ethofumesate, Ethobenzanid, Ethoxyfen, Ethametsulfuron, Ethoxysulfuron,

Fenoxaprop, Fenoxaprop-P, Fenuron, Flamprop, Flamprop-M, Flazasulfuron, Fluazifop, Fluazifop-P, Fuenachlor, Fluchloralin, Flufenacet Flumeturon, Fluorocglycofen, Fluoronitrofen, Flupropanate, Flurenol, Fluridone, Flurochloridone, Fluroxypyr, Fomesafen, Fosamine, Fosametine, Flamprop-isopropyl, Flamprop-isopropyl-L, Flufenpyr, Flumiclorac-pentyl, Flumipropyn, Flumioxzim, Flurtamone, Flumioxzim, Flupyrsulfuron-methyl, Fluthiacet-methyl,

Glyphosate, Glufosinate-ammonium

Haloxyfop, Hexazinone,

Imazamethabenz, Isoproturon, Isoxaben, Isoxapyrifop, Imazapyr, Imazaquin, Imazethapyr, Ioxynil, Isopropalin, Imazosulfuron, Imazomox, Isoxaflutole, Imazapic,

Ketospiradox,

Lactofen, Lenacil, Linuron,

MCPA, MCPA-hydrazid, MCPA-thioethyl, MCPB, Mecoprop, Mecoprop-P, Mefenacet, Mefluidide, Mesosulfuron, Metam, Metamifop, Metamitron, Metazachlor, Methabenzthiazuron, Methazole, Methoroptryne, Methyldymron, Methylisothiocyanate, Metobromuron, Metoxuron, Metribuzin, Metsulfuron, Molinate, Monalide, Monolinuron, MSMA, Metolachlor, Metosulam, Metobenzuron,

Naproanilide, Napropamide, Naptalam, Neburon, Nicosulfuron, Norflurazon, Natriumchlorat,

Oxadiazon, Oxyfluorfen, Oxysulfuron, Orbencarb, Oryzalin, Oxadiargyl,

Propyzamide, Prosulfocarb, Pyrazolate, Pyrazolsulfuron, Pyrazoxyfen, Pyribenzoxim, Pyributicarb, Pyridate, Paraquat, Pebulate, Pendimethalin, Pentachlorophenol, Pentoxazone, Pentanochlor, Petroleum oils, Phenmedipham, Picloram, Piperophos, Pretilachlor, Primisulfuron, Prodiamine, Profoxydim, Prometryn, Propachlor, Propanil, Propaquizafob, Propazine, Propham, Propisochlor, Pyriminobac-methyl, Pelargonsäure, Pyrithiobac, Pyraflufen-ethyl,

Quinmerac, Quinocloamine, Quizalofop, Quizalofop-P, Quinchlorac,

Rimsulfuron

Sethoxydim, Sifuron, Simazine, Simetryn, Sulfosulfuron, Sulfometuron, Sulfentrazone, Sulcotrione, Sulfosate,

Teeröle, TCA, TCA-Natrium, Tebutam, Tebuthiuron, Terbacil, Terbumeton, Terbuthylazine, Terbutryn, Thiazafluoron, Thifensulfuron, Thiobencarb, Thiocarbazil, Tralkoxydim, Triallate, Triasulfuron, Tribenuron, Triclopyr, Tridiphane, Trietazine, Trifluralin, Tycor, Thdiazimin, Thiazopyr, Triflusulfuron,

Vernolate.

Die Erfindung betrifft weiterhin die Verwendung der erfindungsgemäßen Zusammensetzung zum Schutz von technischen Materialien vor Befall und/oder Zerstörung durch Mikroorganismen.

Unter technischen Materialien sind im vorliegenden Zusammenhang nichtlebende Materialien zu verstehen, die für die Verwendung in der Technik zubereitet worden sind. Beispielsweise können technische Materialien, die durch diese Erfindung vor mikrobieller Veränderung oder Zerstörung geschützt werden sollen, Klebstoffe, Leime, Papier und Karton, Textilien, Leder, Holz, Holzwerkstoffe, Holz-Plastik-Verbundstoffe, Anstrichmittel, Kunststoffartikel, Kühlschmierstoffe und andere Materialien sein, die von Mikroorganismen befallen oder zersetzt werden können. Im Rahmen der zu schützenden Materialien seien auch Teile von Produktionsanlagen, beispielsweise Kühlwasserkreisläufe, genannt, die durch Vermehrung von Mikroorganismen beeinträchtigt werden können. Im Rahmen der vorliegenden Erfindung seien als technische Materialien vorzugsweise Klebstoffe, Leime, Papiere und Kartone, Leder, Holz, Holzwerkstoffe, Holz-Plastikverbundstoffe, Anstrichmittel, Kühlschmiermittel und Wärmeübertragungsflüssigkeiten genannt, besonders bevorzugt sind als technische Materialien Holz, Holzwerkstoffe und Holz-Plastik-Verbundstoffe (sogenannte Wood-Plastic Composites WPC).

Unter Holz wird insbesondere verstanden: Bauholz, Holzbalken, Eisenbahnschwellen, Brückenteile, Bootsstege, Holzfahrzeuge, Kisten, Paletten, Container, Telefonmasten, Holzzäune, Holzverkleidungen, Holzfernster und -türen, Tischlerarbeiten und Holzprodukte, die beim Hausbau oder in der Bautischlerei Verwendung finden.

Unter Holzwerkstoffen wird insbesondere verstanden: Sperrholz, Spanplatten, Faserplatten, OSB-Platten (oriented strand board) oder Verbundplatten.

Unter Holz-Plastik-Verbundstoff wird insbesondere verstanden: thermoplastisch prozessierbare Verbundwerkstoffe bestehend aus Holz, Kunststoff und Additiven.

Besonders bevorzugt ist Holz.

Als Mikroorganismen, die einen Abbau oder eine Veränderung der technischen Materialien bewirken können, seien beispielsweise Bakterien, Pilze, Hefen, Algen und Schleimorganismen genannt. Vorzugsweise wirken die erfindungsgemäßen Zusammensetzungen gegen holzzerstörende Basidiomyceten, vorzugsweise Holobasidiomyceten.

Hierbei seien insbesondere Pilze der folgenden Gattungen genannt:

Coniophora, wie Coniophora puetana,

Lentinus, wie Lentinus tigrinus,

Polyporus, wie Polyporus versicolor,

Gloeophyllum, wie Gloeophyllum trabeum,

Poria, wie Poria placenta,

Coriolus, wie Coriolus versicolor,

Stereum, wie Stereum sanguinolentum.

Die erfindungsgemäß einzusetzenden Zusammensetzungen wirken darüber hinaus gegen holzverfärbende und Moderfäule verursachende Ascomyceten und zugeordnete Deuteromyceten, wie zum Beispiel
Arten der Gattung Glenospora wie Glenospora graphii,
Arten der Gattung Chaetomium wie Chaetomium globosum,
Arten der Gattung Humicola wie Humicola grisea,
Arten der Gattung Petriella wie Petriella setifera,
Arten der Gattung Trichurus wie Trichurus spiralis,
Arten der Gattung Lecythophora wie Lecythophora mutabilis
Arten der Gattung Sclerophoma wie Sclerophoma pityophila
Arten der Gattung Aureobasidium wie Aureobasidium pullulans.

Die Erfindung betrifft weiterhin technische Materialien insbesondere Holz, Holzwerkstoff oder Holz-Plastik-Verbundstoff enthaltend

a) wenigstens ein Azol und

b) wenigstens ein Phenol der Formel (I) oder deren Salze

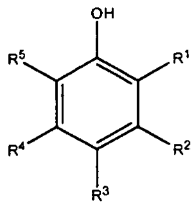

(I)

worin $R^1$, $R^2$, $R^3$, $R^4$ und $R^5$ jeweils unabhängig voneinander für Wasserstoff, gegebenenfalls substituiertes $C_1$-$C_{20}$-Alkyl, $C_2$-$C_{20}$-Alkenyl, $C_7$-$C_{18}$-Alkylaryl oder $C_3$-$C_{20}$-Cycloalkyl steht, mit der Maßgabe, dass wenn die Reste $R^1$-$R^5$ ausschließlich für ggf. substituiertes $C_1$-$C_{20}$-Alkyl und ggf. für Wasserstoff stehen

- wenigstens einer der Reste $R^1$-$R^5$ für einen durch einen Phenylrest substituierten $C_1$-$C_2$-Alkylrest steht, wobei der Phenylrest ggf. durch Hydroxy und/oder $C_1$-$C_4$-Alkyl substituiert ist und
- die Verbindung der Formel (I) wenigstens eine Methylgruppe trägt, wobei die oben genannten bevorzugten Ausführungsformen auch hier gelten.

Die Erfindung betrifft weiterhin ein Verfahren zum Schutz von technischen Materialien vor Befall und/oder Zerstörung durch Mikroorganismen, **dadurch gekennzeichnet, dass** man wenigstens eine Zusammensetzung, enthaltend

a) wenigstens ein Azol und

b) wenigstens ein Phenol der Formel (I) oder deren Salze

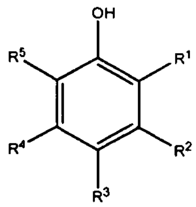

(I)

worin $R^1$, $R^2$, $R^3$, $R^4$ und $R^5$ jeweils unabhängig voneinander für Wasserstoff, gegebenenfalls substituiertes $C_1$-$C_{20}$-Alkyl, $C_2$-$C_{20}$-Alkenyl, $C_7$-$C_{18}$-Alkylaryl oder $C_3$-$C_{20}$-Cycloalkyl steht, mit der Maßgabe, dass wenn die Reste $R^1$-$R^5$ ausschließlich für ggf. substituiertes $C_1$-$C_{20}$-Alkyl und ggf. für Wasserstoff stehen

- wenigstens einer der Reste $R^1$-$R^5$ für einen durch einen Phenylrest substituierten $C_1$-$C_2$-Alkylrest steht, wobei der Phenylrest ggf. durch Hydroxy und/oder $C_1$-$C_4$-Alkyl substituiert ist und
- die Verbindung der Formel (I) wenigstens eine Methylgruppe trägt

auf den Mikroorganismus oder dessen Lebensraum einwirken lässt, wobei die oben genannten bevorzugten Ausführungsformen auch hier gelten.

Überraschenderweise wurde nun gefunden, dass durch die erfindungsgemäßen Zusammensetzungen die Wirkung von Azolen gesteigert und dadurch Wirkungsschwächen verringert werden können, so dass weniger Wirkstoff verwendet werden kann bzw. ein breiteres Spektrum an Schadpilzen erfasst wird. 6,6'-Di-tert-butyl-2,2'-methylendi-p-kresol hat eine sehr geringe Wasserlöslichkeit von <1 ppm und einen niedrigen Dampfdruck (0,0001 hPa bei 50°C), wodurch Verluste durch Auswaschen und/oder Verdampfen minimiert werden. Im Vgl. zur in US6231651 beschriebenen Wirkverstärkung mit BHT können deutlich kleinere Mengen an Wirkverstärker der Komponente b) eingesetzt werden, wodurch die Verwendung ökonomischer ist. Styrolisiertes Phenol und 6,6'-Di-tert-butyl-2,2'-methylendi-p-kresol zeigen jeweils in Kombination mit Azolen darüber hinaus gegen verschiedene Pilze einen Synergismus.

Bei dem erfindungsgemäßen Verfahren bzw. bei der Verwendung werden die Zusammensetzungen vorzugsweise durch Streichen, Tränken, Besprühen, Imprägnieren oder in sonstiger Weise auf das technische Material aufgetragen.

Bei Holz sind bevorzugt großtechnische Imprägnierverfahren, zum Beispiel das Vakuum-, Doppelvakuum-, Vakuumdruck- oder Druckverfahren.

Holz-Plastik-Verbundstoffe können bspw. dadurch hergestellt werden, dass man Holzpartikel, ein thermoplastisches Polymer und die Zusammensetzungen unter thermischer Energie vermischt, insbesondere extrudiert oder spritzgießt.

Holzwerkstoffe können beispielsweise mit dem Leimuntermischverfahren behandelt werden. Dabei wird die erfindungsgemäße Zusammensetzung ggf. in Form einer Formulierung der Leimflotte beigegeben und dieser biozidausgerüstete Leim wie üblich auf die Späne aufgebracht, insbesondere aufgedüst (z.B. bei Span- oder OSB-Platten) oder über Walzen auf die Furniere aufgebracht (z.B. bei Sperrholz). Beim Oberflächenverfahren wird die erfindungsgemäße Zusammensetzung ggf. in Form einer Formulierung auf den Holzwerkstoff aufgesprüht oder mit einer Walze aufgetragen.

Die Anwendungskonzentrationen der erfindungsgemäßen Wirkstoffe richten sich nach der Art und dem Vorkommen der zu bekämpfenden Mikroorganismen sowie nach der Zusammensetzung des zu schützenden Materials. Die optimale Einsatzmenge kann durch Testreihen ermittelt werden. Im Allgemeinen liegen die Anwendungskonzentrationen im Bereich von 0,001 bis 5 Gewichts%, vorzugsweise von 0,005 bis 1,0 Gewichts% des Wirkstoffes zuzüglich Wirkverstärker und ggfs. weiterer Zusätze, bezogen auf das zu schützende Material.

Im industriellen Holzschutz wird beispielsweise 10 bis 500 g Wirkstoff pro $m^3$ Holz, vorzugsweise 50 bis 300 $g/m^3$ zuzüglich Wirkverstärker und ggfs. weiterer Zusätze eingesetzt.

**Beispiele**

**Beispiel 1:** Kombinationen von Tebuconazol und 6,6'-Di-tert-butyl-2,2'-methylendi-p-kresol (Vulkanox® BKF) gegen den Holzdestruenten Coriolus versicolor

Aus einer Kolonie des Holzdestruenten Coriolus versicolor wurden Mycelstücke ausgestochen und auf einem Malzextrakt-Pepton-haltigen Nähragar bei 26°C inkubiert. Hierbei wurde das Hyphenwachstum mit und ohne Wirkstoff- bzw. 6,6'-Di-tert-butyl-2,2'-methylendi-p-kresol verglichen. Als Minimale Hemmkonzentration (MHK) wurde die Konzentration angegeben, welche das radiale Hyphenwachstum völlig unterdrückt (Inkubationszeit: ca. 1 Woche, abhängig von dem Pilzwachstum der Vergleichsprobe ohne Wirkstoff).

Nach der von Kull et al. (F.C. Kull, P.C. Eismann, H.D. Sylvestrowicz, R.L. Mayer, Applied Microbiology 1961, 9, 538-541) beschriebenen Methode wurde der Synergismus ermittelt. Dabei gelten folgende Beziehungen:

$$\frac{Q_A}{Q_a} + \frac{Q_B}{Q_b} = SI$$

SI = 1 bedeutet Additivität
SI > 1 bedeutet Antagonismus
SI < 1 bedeutet Synergismus
$Q_a$ = Konzentration von Substanz A, welche die MHK darstellt
$Q_b$ = Konzentration von Substanz B, welche die MHK darstellt
$Q_A$ = Konzentration von Substanz A in der Konzentration von A/B, die das Mikrobenwachstum unterbindet
$Q_B$ = Konzentration von Substanz B in der Konzentration von A/B, die das Mikrobenwachstum unterbindet

Ergebnisse:

| | MHK-Wert gegen Coriolus versicolor (ppm) | Synergistischer Wert SI |
|---|---|---|
| Tebuconazol | 1,0 | - |
| Tebuconazol / Phenol 1[2]) (1 : 4) | 2,0 | 0,45 |
| Tebuconazol / Phenol 1[2]) (1 : 9) | 3,0 | 0,39 |
| Phenol I[2]) | > 30[1]) | - |
| [1]) Bis 30 ppm konnte keine eigene Wirkung festgestellt werden.<br>[2]) Phenol I: 6,6'-Di-tert-butyl-2,2'-methylendi-p-kresol (Vulkanox® BKF, 98%) | | |

Tebuconazol und 6,6'-Di-tert-butyl-2,2'-methylendi-p-kresol zeigen im Fall des Holzdestruenten Coriolus versicolor in verschiedenen Mischungsverhältnissen einen ausgeprägten Synergismus.

**Beispiel 2:** Kombinationen von Tebuconazol und styrolisiertem Phenol (Vulkanox® SP) gegen den Holzdestruenten Coriolus versicolor

| | MHK-Wert gegen Coriolus versicolor (ppm) | Synergistischer Wert SI |
|---|---|---|
| Tebuconazol | 1,0 | - |
| Tebuconazol / Phenol II[2] (1 : 1) | 0,5 | 0,26 |
| Tebuconazol / Phenol II[2]) (1 : 4) | 2,0 | 0,45 |
| Tebuconazol / Phenol II[2]) (1 : 9) | 2,0 | 0,26 |
| Phenol II[2]) | > 30[1]) | - |
| [1]) Bis 30 ppm konnte keine eigene Wirkung festgestellt werden.<br>[2]) Phenol II: styrolisiertes Phenol (Vulkanox® SP): ca 12 % einfach, ca. 45% zweifach und ca. 43% dreifach styrolisiert | | |

Tebuconazol und styrolisiertes Phenol zeigen im Fall des Holzdestruenten Coriolus versicolor einen ausgeprägten Synergismus.

**Beispiel 3:** Kombinationen von Tebuconazol und styrolisiertem Phenol (Vulkanox® SP) gegen den Holzdestruenten Lentinus tigrinus

| | MHK-Wert gegen Lentinus tigrinus (ppm) | Synergistischer Wert SI |
|---|---|---|
| Tebuconazol | 0,3 | - |
| Tebuconazol / Phenol II[2]) (1 : 1) | 0,5 | 0,84 |
| Phenol II[2]) | > 30[1]) | - |
| [1]) Bis 30 ppm konnte keine eigene Wirkung festgestellt werden.<br>[2]) II: styrolisiertes Phenol (Vulkanox® SP): ca 12 % einfach, ca. 45% zweifach und ca. 43% dreifach styrolisiert | | |

Tebuconazol und styrolisiertes Phenol zeigen im Fall den Holzdestruenten Lentinus tigrinus einen ausgeprägten Synergismus.

**Patentansprüche**

1. Zusammensetzung, enthaltend

   a) wenigstens ein Azol und
   b) wenigstens ein Phenol der Formel (I) oder deren Salze

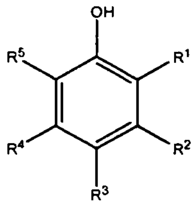

(I)

worin $R^1$, $R^2$, $R^3$, $R^4$ und $R^5$ jeweils unabhängig voneinander für Wasserstoff, gegebenenfalls substituiertes $C_1$-$C_{20}$-Alkyl, $C_2$-$C_{20}$-Alkenyl, $C_7$-$C_{18}$-Alkylaryl oder $C_3$-$C_{20}$-Cycloalkyl steht, mit der Maßgabe, dass wenigstens einer der Reste $R^1$-$R^5$ ungleich Wasserstoff ist und mit der Maßgabe, dass wenn die Reste $R^1$-$R^5$ ausschließlich für ggf. substituiertes $C_1$-$C_{20}$-Alkyl und ggf. für Wasserstoff stehen

   - wenigstens einer der Reste $R^1$-$R^5$ für einen durch einen Phenylrest substituierten $C_1$-$C_2$-Alkylrest steht, wobei der Phenylrest ggf. durch Hydroxy und/oder $C_1$-$C_4$-Alkyl substituiert ist und
   - die Verbindung der Formel (I) wenigstens eine Methylgruppe trägt.

2. Zusammensetzung gemäß Anspruch 1, **dadurch gekennzeichnet, dass** sie wenigstens ein Triazol als Komponente a) enthält, insbesondere ein Triazol ausgewählt aus der Gruppe bestehend aus Azaconazol, Bitertanol, Bromuconazol, Cyproconazol, Diclobutrazol, Difenoconazol, Diniconazol, Epoxyconazol, Etaconazol, Fenbuconazol, Fluquinconazol, Flusilazol, Flutriafol, Furconazol, Hexaconazol, Imibenconazol, Ipconazol, Myclobutanil, Metconazol, Penconazol, Propiconazol, Prothioconazol, Simeconazol, Tebuconazol, Tetraconazol, Triadimefon, Triadimenol, Triticonazol und Uniconazol sowie deren Metallsalze und Säureaddukte.

3. Zusammensetzung gemäß Anspruch 1, enthaltend

   a1) wenigstens ein Azol ausgewählt aus der Gruppe bestehend aus Azaconazol, Bitertanol, Bromuconazol, Cyproconazol, Diclobutrazol, Difenoconazol, Diniconazole, Epoxyconazol, Etaconazol, Fenbuconazol, Fluquinconazol, Flusilazol, Flutriafol, Furconazol, Hexaconazol, Imibenconazol, Ipconazol, Myclobutanil, Metconazol, Penconazol, Propiconazol, Prothioconazol, Simeconazol, Tebuconazol, Tetraconazol, Triticonazol und Uniconazol sowie deren Metallsalze und Säureaddukte und
   a2) wenigstens ein Azol ausgewählt aus der Gruppe Triadimenol und Triadimefon.

4. Zusammensetzung gemäß Anspruch 1 enthaltend wenigstens ein Azol ausgewählt aus der Gruppe Tebuconazol, Propiconazol und Cyproconazol und ggf. ein weiteres Azol ausgewählt aus der Gruppe Triadimenol und Triadimefon.

5. Zusammensetzung gemäß Anspruch 1, worin wenigstens einer der Reste $R^1$-$R^5$ der Formel (I) für
   - $CHR^6$-Phenyl steht, worin
   $R^6$ für Wasserstoff oder Methyl steht und
   Phenyl unsubstituiert oder durch Hydroxy und wenigstens einen $C_1$-$C_4$-Alkylrest substituiert ist.

6. Zusammensetzung gemäß Anspruch 1, die als Komponente b) wenigstens ein styrolisiertes Phenol oder 6,6'-Di-tert-butyl-2,2'-methylendi-p-kresol enthält.

7. Verwendung von Zusammensetzungen gemäß wenigstens einem der Ansprüche 1 bis 6 zum Schutz von technischen Materialien vor Befall und/oder Zerstörung durch Mikroorganismen.

8. Verwendung gemäß Anspruch 7, **dadurch gekennzeichnet, dass** das technische Material Holz, Holzwerkstoff oder Holz-Plastik-Verbundstoff ist.

**9.** Verwendung gemäß Anspruch 7 zum Schutz von Holz, Holzwerkstoff oder Holz-Plastik-Verbundstoff durch holzzerstörende Basidiomyceten, insbesondere Holobasidiomyceten.

**10.** Technische Materialien, insbesondere Holz, Holzwerkstoff oder Holz-Plastik-Verbundstoff enthaltend

a) wenigstens ein Azol und
b) wenigstens ein Phenol der Formel (I) oder deren Salze

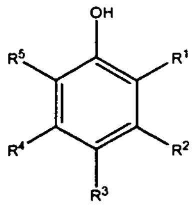

(I)

worin $R^1$, $R^2$, $R^3$, $R^4$ und $R^5$ jeweils unabhängig voneinander für Wasserstoff, gegebenenfalls substituiertes $C_1$-$C_{20}$-Alkyl, $C_2$-$C_{20}$-Alkenyl, $C_7$-$C_{18}$-Alkylaryl oder $C_3$-$C_{20}$-Cycloalkyl steht, mit der Maßgabe, dass wenn die Reste $R^1$-$R^5$ ausschließlich für ggf. substituiertes $C_1$-$C_{20}$-Alkyl und ggf. für Wasserstoff stehen

- wenigstens einer der Reste $R^1$-$R^5$ für einen durch einen Phenylrest substituierten $C_1$-$C_2$-Alkylrest steht, wobei der Phenylrest ggf. durch Hydroxy und/oder $C_1$-$C_4$-Alkyl substituiert ist und
- die Verbindung der Formel (I) wenigstens eine Methylgruppe trägt.

**11.** Verfahren zum Schutz von technischen Materialien vor Befall und/oder Zerstörung durch Mikroorganismen, **dadurch gekennzeichnet, dass** man wenigstens eine Zusammensetzung, enthaltend

a) wenigstens ein Azol und
b) wenigstens ein Phenol der Formel (I) oder deren Salze

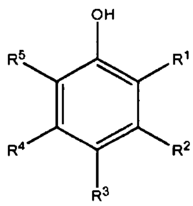

(I)

worin $R^1$, $R^2$, $R^3$, $R^4$ und $R^5$ jeweils unabhängig voneinander für Wasserstoff, gegebenenfalls substituiertes $C_1$-$C_{20}$-Alkyl, $C_2$-$C_{20}$-Alkenyl, $C_7$-$C_{18}$-Alkylaryl oder $C_3$-$C_{20}$-Cycloalkyl steht, mit der Maßgabe, dass wenn die Reste $R^1$-$R^5$ ausschließlich für ggf. substituiertes $C_1$-$C_{20}$-Alkyl und ggf. für Wasserstoff stehen

- wenigstens einer der Reste $R^1$-$R^5$ für einen durch einen Phenylrest substituierten $C_1$-$C_2$-Alkylrest steht, wobei der Phenylrest ggf. durch Hydroxy und/oder $C_1$-$C_4$-Alkyl substituiert ist und
- die Verbindung der Formel (I) wenigstens eine Methylgruppe trägt auf den Mikroorganismus oder dessen Lebensraum einwirken lässt.

## Claims

**1.** Composition, comprising

a) at least one azole and
b) at least one phenol of the formula (I) or a salt thereof

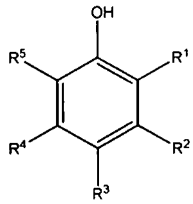

(I)

in which $R^1$, $R^2$, $R^3$, $R^4$ and $R^5$ each independently of one another represent hydrogen, optionally substituted $C_1$-$C_{20}$-alkyl, $C_2$-$C_{20}$-alkenyl, $C_7$-$C_{18}$-alkylaryl or $C_3$-$C_{20}$-cycloalkyl, with the proviso that at least one of the radicals $R^1$-$R^5$ is not hydrogen and with the proviso that, if the radicals $R^1$-$R^5$ exclusively represent optionally substituted $C_1$-$C_{20}$-alkyl or optionally hydrogen

- at least one of the radicals $R^1$-$R^5$ represents a $C_1$-$C_2$-alkyl radical substituted by a phenyl radical, where the phenyl radical is optionally substituted by hydroxyl and/or $C_1$-$C_4$-alkyl and
- the compound of the formula (I) carries at least one methyl group.

**2.** Composition according to Claim 1, **characterized in that** it comprises at least one triazole as component a), in particular a triazole selected from the group consisting of azaconazole, bitertanol, bromuconazole, cyproconazole, diclobutrazol, difenoconazole, diniconazole, epoxyconazole, etaconazole, fenbuconazole, fluquinconazole, flusilazole, flutriafol, furconazole, hexaconazole, imibenconazole, ipconazole, myclobutanil, metconazole, penconazole, propiconazole, prothioconazole, simeconazole, tebuconazole, tetraconazole, triadimefon, triadimenol, triticonazole and uniconazole and their metal salts and acid adducts.

**3.** Composition according to Claim 1, comprising:

a1) at least one azole selected from the group consisting of azaconazole, bitertanol, bromuconazole, cyproconazole, diclobutrazol, difenoconazole, diniconazole, epoxyconazole, etaconazole, fenbuconazole, fluquinconazole, flusilazole, flutriafol, furconazole, hexaconazole, imibenconazole, ipconazole, myclobutanil, metconazole, penconazole, propiconazole, prothioconazole, simeconazole, tebuconazole, tetraconazole, triticonazole and uniconazole and their metal salts and acid adducts and
a2)at least one azole selected from the group consisting of triadimenol and triadimefon.

**4.** Composition according to Claim 1, comprising at least one azole selected from the group consisting of tebuconazole, propiconazole and cyproconazole and optionally a further azole selected from the group consisting of triadimenol and triadimefon.

**5.** Composition according to Claim 1 where at least one of the radicals $R^1$-$R^5$ of the formula (I) represents
-CHR$^6$-phenyl in which
$R^6$ represents hydrogen or methyl and
phenyl is unsubstituted or substituted by hydroxyl and at least one $C_1$-$C_4$-alkyl radical.

**6.** Composition according to Claim 1 comprising, as component b), at least one styrenated phenol or 6,6'-di-tert-butyl-2,2'-methylenedi-p-cresol.

**7.** Use of compositions according to at least one of Claims 1 to 6 for protecting industrial materials against attack and/or destruction by microorganisms.

**8.** Use according to Claim 7, **characterized in that** the industrial material is wood, a timber product or a wood-plastic composite.

**9.** Use according to Claim 7 for the protection of wood, a timber product or a wood-plastic composite by wood-destroying basidiomycetes, in particular holobasidiomycetes.

**10.** Industrial materials, in particular wood, a timber product or a wood-plastic composite, comprising

a) at least one azole and
b) at least one phenol of the formula (I) or a salt thereof

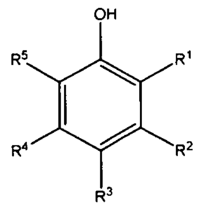

(I)

in which $R^1$, $R^2$, $R^3$, $R^4$ and $R^5$ each independently of one another represent hydrogen, optionally substituted $C_1$-$C_{20}$-alkyl, $C_2$-$C_{20}$-alkenyl, $C_7$-$C_{18}$-alkylaryl or $C_3$-$C_{20}$-cycloalkyl, with the proviso that, if the radicals $R^1$-$R^5$ exclusively represent optionally substituted $C_1$-$C_{20}$-alkyl or optionally hydrogen

- at least one of the radicals $R^1$-$R^5$ represents a $C_1$-$C_2$-alkyl radical substituted by a phenyl radical, where the phenyl radical is optionally substituted by hydroxyl and/or $C_1$-$C_4$-alkyl and
- the compound of the formula (I) carries at least one methyl group.

**11.** Process for protecting industrial materials against attack and/or destruction by microorganisms, **characterized in that** at least one composition comprising

a) at least one azole and
b) at least one phenol of the formula (I) or a salt thereof

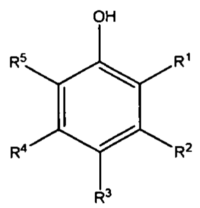

(I)

in which $R^1$, $R^2$, $R^3$, $R^4$ and $R^5$ each independently of one another represent hydrogen, optionally substituted $C_1$-$C_{20}$-alkyl, C-$C_{20}$-alkenyl, $C_7$-$C_{18}$-alkylaryl or $C_3$-$C_{20}$-cycloalkyl, with the proviso that, if the radicals $R^1$-$R^5$ exclusively represent optionally substituted $C_1$-$C_{20}$-alkyl or optionally hydrogen

- at least one of the radicals $R^1$-$R^5$ represents a $C_1$-$C_2$-alkyl radical substituted by a phenyl radical, where the phenyl radical is optionally substituted by hydroxyl and/or $C_1$-$C_4$-alkyl and
- the compound of the formula (I) carries at least one methyl group

is allowed to act on the microorganism or its habitat.

## Revendications

**1.** Composition, contenant :

a) au moins un azole et
b) au moins un phénol de formule (I) ou ses sels

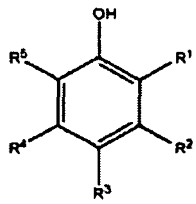

(I)

dans laquelle $R^1$, $R^2$, $R^3$, $R^4$ et $R^5$ représentent chacun indépendamment les uns des autres l'hydrogène, un alkyle en $C_1$-$C_{20}$, alcényle en $C_2$-$C_{20}$), alkylaryle en $C_7$-$C_{18}$ ou cycloalkyle en $C_3$-$C_{20}$ éventuellement substitué, à condition qu'au moins un des radicaux $R^1$ à $R^5$ soit différent de l'hydrogène et à condition que lorsque les radicaux $R^1$ à $R^5$ représentent exclusivement un alkyle en $C_1$-$C_{20}$ éventuellement substitué et éventuellement l'hydrogène,

- au moins un des radicaux $R^1$ à $R^5$ représente un radical alkyle en $C_1$-$C_2$ substitué par un radical phényle, le radical phényle étant éventuellement substitué par hydroxy et/ou alkyle en $C_1$-$C_4$, et
- le composé de formule (I) porte au moins un groupe méthyle.

**2.** Composition selon la revendication 1, **caractérisée en ce qu'**elle contient au moins un triazole en tant que composant a), notamment un triazole choisi dans le groupe constitué par l'azaconazole, le bitertanol, le bromuconazole, le cyproconazole, le diclobutrazole, le difénoconazole, le diniconazole, l'époxyconazole, l'étaconazole, le fenbuconazole, le fluquinconazole, le flusilazole, le flutriafol, le furconazole, l'hexaconazole, l'imibenconazole, l'ipconazole, le myclobutanil, le metconazole, le penconazole, le propiconazole, le prothioconazole, le siméconazole, le tébuconazole, le tétraconazole, le triadiméfon, le triadiménol, le triticonazole et l'uniconazole, ainsi que leurs sels métalliques et adduits acides.

**3.** Composition selon la revendication 1, contenant :

a1) au moins un azole choisi dans le groupe constitué par l'azaconazole, le bitertanol, le bromuconazole, le cyproconazole, le diclobutrazole, le difénoconazole, le diniconazole, l'époxyconazole, l'étaconazole, le fenbuconazole, le fluquinconazole, le flusilazole, le flutriafol, le furconazole, l'hexaconazole, l'imibenconazole, l'ipconazole, le myclobutanil, le metconazole, le penconazole, le propiconazole, le prothioconazole, le siméconazole, le tébuconazole, le tétraconazole, le triticonazole et l'uniconazole, ainsi que leurs sels métalliques et adduits acides, et
a2) au moins un azole choisi dans le groupe constitué par le triadiménol et le triadiméfon.

**4.** Composition selon la revendication 1, contenant au moins un azole choisi dans le groupe constitué par le tébuconazole, le propiconazole et le cyproconazole et éventuellement un autre azole choisi dans le groupe constitué par le triadiménol et le triadiméfon.

**5.** Composition selon la revendication 1, dans laquelle au moins un radicaux $R^1$ à $R^5$ de la formule (I) représente
- $CHR^6$-phényle,
$R^6$ représentant hydrogène ou méthyle et
phényle n'étant pas substitué ou étant substitué par hydroxy et au moins un radical alkyle en $C_1$-$C_4$.

**6.** Composition selon la revendication 1, qui contient en tant que composant b) au moins un phénol styrénisé ou le 6,6'-di-tert-butyl-2,2'-méthylènedi-p-crésol.

**7.** Utilisation de compositions selon au moins l'une quelconque des revendications 1 à 6 pour la protection de matériaux techniques de l'infestation et/ou de la destruction par des microorganismes.

**8.** Utilisation selon la revendication 7, **caractérisée en ce que** le matériau technique est du bois, un matériau à base de bois ou un composite bois-plastique.

**9.** Utilisation selon la revendication 7, pour la protection de bois, d'un matériau à base de bois ou d'un composite bois-plastique contre les basidiomycètes détruisant le bois, notamment des holobasidiomycètes.

**10.** Matériaux techniques, notamment bois, matériau à base de bois ou composite bois-plastique, contenant :

a) au moins un azole et
b) au moins un phénol de formule (I) ou ses sels

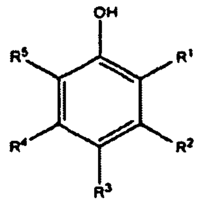

(I)

dans laquelle $R^1$, $R^2$, $R^3$, $R^4$ et $R^5$ représentent chacun indépendamment les uns des autres l'hydrogène, un alkyle en $C_1$-$C_{20}$, alcényle en $C_2$-$C_{20}$, alkylaryle en $C_7$-$C_{18}$ ou cycloalkyle en $C_3$-$C_{20}$ éventuellement substitué, à condition que lorsque les radicaux $R^1$ à $R^5$ représentent exclusivement un alkyle en $C_1$-$C_{20}$ éventuellement substitué et éventuellement l'hydrogène,

- au moins un des radicaux $R^1$ à $R^5$ représente un radical alkyle en $C_1$-$C_2$ substitué par un radical phényle, le radical phényle étant éventuellement substitué par hydroxy et/ou alkyle en $C_1$-$C_4$, et
- le composé de formule (I) porte au moins un groupe méthyle.

**11.** Procédé de protection de matériaux techniques de l'infestation et/ou de la destruction par des microorganismes, **caractérisé en ce qu'**au moins une composition contenant :

a) au moins un azole et
b) au moins un phénol de formule (I) ou ses sels

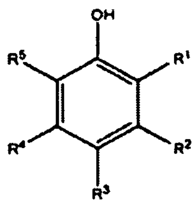

(I)

dans laquelle $R^1$, $R^2$, $R^3$, $R^4$ et $R^5$ représentent chacun indépendamment les uns des autres l'hydrogène, un alkyle en $C_1$-$C_{20}$, alcényle en $C_2$-$C_{20}$, alkylaryle en $C_7$-$C_{18}$ ou cycloalkyle en $C_3$-$C_{20}$ éventuellement substitué, à condition que lorsque les radicaux $R^1$ à $R^5$ représentent exclusivement un alkyle en $C_1$-$C_{20}$ éventuellement substitué et éventuellement l'hydrogène,

- au moins un des radicaux $R^1$ à $R^5$ représente un radical alkyle en $C_1$-$C_2$ substitué par un radical phényle, le radical phényle étant éventuellement substitué par hydroxy et/ou alkyle en $C_1$-$C_4$, et
- le composé de formule (I) porte au moins un groupe méthyle,

est laissée agir sur le microorganisme ou son habitat.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 0071314 A
- WO 03065807 A
- US 6231651 B1
- US 6231651 B


### In der Beschreibung aufgeführte Nicht-Patentliteratur


- *Phytochemistry,* 2002, vol. 61, 555-560
- **F.C. Kull ; P.C. Eismann ; H.D. Sylvestrowicz ; R.L. Mayer.** *Applied Microbiology,* 1961, vol. 9, 538-541